# EUROPÄISCHE PATENTANMELDUNG

(11) **EP 3 640 752 A1**
(43) Veröffentlichungstag der Anmeldung: **22.04.2020**
(21) Anmeldenummer: 18201234.4
(22) Anmeldetag: 18.10.2018
(51) Int. Cl.: G05B 19/25, G05B 19/416, G05B 19/4103

(54) **OPTIMIERTE BEARBEITUNG VON WERKSTÜCKEN DURCH WERKZEUGMASCHINEN**

(71) Anmelder: Siemens Aktiengesellschaft, 80333 München (DE)
(72) Erfinder: Alkafafi, Loay, 91058 Erlangen (DE); Armbrecht, Frank, 91099 Poxdorf (DE); Geissdörfer, Klaus, 91056 Erlangen (DE); Schäfers, Elmar, 90763 Fürth (DE); Seeger, Guido, 91083 Baiersdorf (DE)

(57) **Zusammenfassung**

Eine Recheneinrichtung (10) erstellt anhand einer herzustellenden Kontur eines Werkstücks (5) ein Teileprogramm (16) für eine numerische Steuerung (19). Die Recheneinrichtung (10) erstellt das Teileprogramm (16) in der Form, dass es eine Abfolge von von der numerischen Steuerung (19) sequenziell nacheinander abzuarbeitenden Datensätzen (17) umfasst. Die Datensätze (17) umfassen für mehrere Dimensionen der Bewegung eines Werkzeugs (4) einer von der numerischen Steuerung (19) gesteuerten Werkzeugmaschine (2) relativ zum Werkstück (5) jeweils ein Ortspolynom (fx, fy, fz, fα, fβ). Die Ortspolynome (fx, fy, fz, fα, fβ) definieren für aufeinanderfolgende Abschnitte eines Bahnparameters (s) jeweils einen Verlauf in der jeweiligen Dimension als Funktion des Bahnparameters (s). Das Teileprogramm (16) kann von einer entsprechenden numerischen Steuerung (19) direkt verwertet werden.

## Beschreibung

Die vorliegende Erfindung geht aus von einem Betriebsverfahren für eine Recheneinrichtung,
- wobei die Recheneinrichtung anhand einer herzustellenden Kontur eines Werkstücks ein Teileprogramm für eine numerische Steuerung erstellt,
- wobei die Recheneinrichtung das Teileprogramm in der Form erstellt, dass es eine Abfolge von von der numerischen Steuerung sequenziell nacheinander abzuarbeitenden Datensätzen umfasst.

Die vorliegende Erfindung geht weiterhin aus von einem Computerprogramm für eine Recheneinrichtung, wobei das Computerprogramm Maschinencode umfasst, der von der Recheneinrichtung abarbeitbar ist, wobei die Abarbeitung des Maschinencodes durch die Recheneinrichtung bewirkt, dass die Recheneinrichtung ein derartiges Betriebsverfahren ausführt.

Die vorliegende Erfindung geht weiterhin aus von einer Recheneinrichtung, wobei die Recheneinrichtung mit einem derartigen Computerprogramm programmiert ist, so dass die Recheneinrichtung im Betrieb ein derartiges Betriebsverfahren ausführt.

Die vorliegende Erfindung geht weiterhin aus von einem Teileprogramm für eine numerische Steuerung,
- wobei das Teileprogramm eine Abfolge von von der numerischen Steuerung sequenziell nacheinander abzuarbeitenden Datensätzen umfasst.

Die vorliegende Erfindung geht weiterhin aus von einem Steuerverfahren für eine numerische Steuerung,
- wobei die numerische Steuerung sequenziell nacheinander eine Abfolge von Datensätzen eines Teileprogramms abarbeitet,
- wobei die numerische Steuerung anhand der Datensätze zumindest Lagesollwerte für mehrere Achsen einer von der numerischen Steuerung gesteuerten Werkzeugmaschine ermittelt und die Achsen entsprechend ansteuert, so dass ein Werkzeug der Werkzeugmaschine relativ zu einem zu bearbeitenden Werkstück entlang einer durch das Teileprogramm definierten Bahn verfahren wird.

Die vorliegende Erfindung geht weiterhin aus von einem Betriebssystem für eine numerische Steuerung, wobei das Betriebssystem Maschinencode umfasst, der von der numerischen Steuerung abarbeitbar ist, wobei die Abarbeitung des Maschinencodes durch die numerische Steuerung bewirkt, dass die numerische Steuerung ein derartiges Steuerverfahren ausführt.

Die vorliegende Erfindung geht weiterhin aus von einer numerischen Steuerung, wobei die numerische Steuerung mit einem derartigen Betriebssystem programmiert ist, so dass die numerische Steuerung im Betrieb ein derartiges Steuerverfahren ausführt.

Steuerungen von Werkzeugmaschinen (numerische Steuerungen) berechnen die Lagesollwerte für die Achsen der gesteuerten Werkzeugmaschine anhand von sogenannten Teileprogrammen. Die Teileprogramme umfassen in der Regel eine Abfolge von von der numerischen Steuerung sequenziell nacheinander abzuarbeitenden Datensätzen. Jeder Datensatz enthält für mehrere Dimensionen der Bewegung eines Werkzeugs einer von der numerischen Steuerung gesteuerten Werkzeugmaschine relativ zum zu bearbeitenden Werkstück jeweils einen Lagesollwert und oftmals auch eine zugeordnete Wunschgeschwindigkeit. Die Abfolge der Lagesollwerte definiert - bei n Dimensionen - eine Bahn im n-dimensionalen Raum. Je nach Art der Werkzeugmaschine können die Lagesollwerte direkt mit den Lagesollwerten der Achsen der Werkzeugmaschine korrespondieren. Es ist jedoch ebenso möglich, dass noch eine kinematische Transformation erforderlich ist.

Im Stand der Technik ermittelt die numerische Steuerung anhand der Abfolgen von Lagesollwerten jeweilige Ortspolynome für die Dimensionen der Bewegung des Werkzeugs und steuert sodann die Achsen entsprechend der ermittelten Ortspolynome an. Weiterhin prüft die numerische Steuerung, ob beim Abfahren der jeweiligen Ortspolynome mit der vorgegebenen translatorischen Wunschgeschwindigkeit unter Berücksichtigung der maximal möglichen Dynamik und der kinematischen Transformation der Werkzeugmaschine vorgegebene Toleranzen eingehalten werden. Wenn dies der Fall ist, übernimmt die Steuereinrichtung die vorgegebene Wunschgeschwindigkeit als Sollgeschwindigkeit. Wenn dies hingegen nicht der Fall ist, reduziert die Steuereinrichtung die Sollgeschwindigkeit gegenüber der Wunschgeschwindigkeit so weit, dass die Toleranzen eingehalten werden.

Sowohl die Ermittlung der Ortspolynome als auch die Prüfung auf Einhaltung der Toleranzen und die gegebenenfalls daraus folgende Reduzierung der Sollgeschwindigkeit sind sehr rechenintensiv. Da die Ermittlung der Ortspolynome und der Sollgeschwindigkeit jedoch im Rahmen der Ausführung des Teileprogramms und damit unter engen zeitlichen Randbedingungen erfolgt, sind die von der numerischen Steuerung vorgenommenen Ermittlungen oftmals suboptimal. Das Ergebnis sind demzufolge auch suboptimale Bearbeitungsvorgänge.

Im Stand der Technik sind weiterhin virtuelle Realisierungen sowohl von numerischen Steuerungen als auch von gesamten Werkzeugmaschinen (einschließlich der jeweiligen numerischen Steuerung) bekannt. Diese virtuellen Realisierungen werden im Stand der Technik dazu verwendet, um das Verhalten der jeweiligen realen numerischen Steuerung bzw. der jeweiligen realen Werkzeugmaschine möglichst ideal zu modellieren. "Ideal" bedeutet in diesem Zusammenhang, dass das Verhalten der virtuellen Realisierungen der jeweiligen realen numerischen Steuerung bzw. der jeweiligen realen Werkzeugmaschine so weit wie möglich entsprechend soll. Dies gilt unabhängig davon, ob und gegebenenfalls welche Probleme bei der realen Bearbeitung des Werkstücks auftreten. Die virtuellen Realisierungen werden also im Stand der Technik insbesondere genutzt, um Probleme bei der realen Bearbeitung des Werkstücks vorab aufzudecken, so dass sie durch eine entsprechende Änderung des Teileprogramms oder durch andere Abänderungen vermieden werden können. Sie werden hingegen nicht genutzt, um ein prinzipiell überlegenes Teileprogramm zu erstellen.

Die Aufgabe der vorliegenden Erfindung besteht darin, Möglichkeiten zu schaffen, mittels derer eine überlegene Bearbeitung eines Werkstücks durch ein Werkzeug einer Werkzeugmaschine ermöglicht wird.

Die Aufgabe wird durch ein Betriebsverfahren mit den Merkmalen des Anspruchs 1 gelöst. Vorteilhafte Ausgestaltungen des Betriebsverfahrens sind Gegenstand der abhängigen Ansprüche 2 bis 6.

Erfindungsgemäß wird ein Betriebsverfahren der eingangs genannten Art dadurch ausgestaltet,
- dass die Datensätze für mehrere Dimensionen der Bewegung eines Werkzeugs einer von der numerischen Steuerung gesteuerten Werkzeugmaschine relativ zum Werkstück jeweils ein Ortspolynom umfassen und
- dass die Ortspolynome für aufeinanderfolgende Abschnitte eines Bahnparameters jeweils einen Verlauf der Lagesollwerte in der jeweiligen Dimension als Funktion des Bahnparameters definieren.

Die Grundidee der vorliegenden Erfindung besteht darin, im Rahmen der virtuellen Realisierung der numerischen Steuerung - also im Rahmen des von der Recheneinrichtung ausgeführten Betriebsverfahrens - vom Ansatz her auf die gleiche Art und Weise wie bei der realen numerischen Steuerung anhand der Abfolgen von Lagesollwerten jeweilige Ortspolynome für die Dimensionen der Bewegung des Werkzeugs zu ermitteln. Im Unterschied zur Vorgehensweise des Standes der Technik werden sodann jedoch - beispielsweise durch Variieren dieser Ortspolynome - optimierte Ortspolynome ermittelt. Die Ermittlung der optimierten Ortspolynome kann zwar sehr zeitaufwendig sein. Dies ist jedoch unkritisch, weil die virtuellen Realisierungen der numerischen Steuerung und der Werkzeugmaschine - im Gegensatz zur realen numerischen Steuerung und zur realen Werkzeugmaschine - nicht an eine Ansteuerung von realen Achsen und damit an eine Ausführung in Echtzeit gebunden sind. Es ist daher möglich, die optimierten Ortspolynome - welche die reale numerische Steuerung aus Zeitgründen nicht ermitteln kann - der realen numerischen Steuerung zur Verfügung zu stellen, so dass die reale numerische Steuerung direkt diese Ortspolynome als Grundlage für die Ansteuerung der Achsen heranziehen kann.

Wie im Stand der Technik auch ist es möglich, dass die Recheneinrichtung dem jeweiligen Datensatz eine jeweilige translatorische Wunschgeschwindigkeit zuordnet. Hierbei gibt es zwei Möglichkeiten. Zum einen kann die Recheneinrichtung die translatorische Wunschgeschwindigkeit ohne Berücksichtigung einer maximal möglichen Dynamik oder einer kinematischen Transformation der Werkzeugmaschine ermitteln. Die Recheneinrichtung wird diese Vorgehensweise insbesondere dann ergreifen, wenn ihr die maximal mögliche Dynamik und die kinematische Transformation der Werkzeugmaschine nicht bekannt sind. Sofern der Recheneinrichtung die maximal mögliche Dynamik und die kinematische Transformation der Werkzeugmaschine bekannt sind, ist es jedoch möglich, dass die Recheneinrichtung dem jeweiligen Datensatz als jeweilige translatorische Wunschgeschwindigkeit ein Geschwindigkeitspolynom zuordnet, bei dem maximal mögliche Dynamik und/oder die kinematische Transformation der Werkzeugmaschine berücksichtigt sind. Sofern die translatorische Wunschgeschwindigkeit entsprechend gekennzeichnet ist, ist es daher zusätzlich möglich, dass die reale numerische Steuerung auch die translatorische Wunschgeschwindigkeit bzw. das entsprechende Geschwindigkeitspolynom direkt übernimmt.

Im Rahmen der Ermittlung der Ortspolynome durch die reale numerische Steuerung können nur die zeitlich unmittelbar vorhergehenden Datensätze und die eventuell auch die zeitlich unmittelbar nachfolgenden Datensätze berücksichtigt werden. Hingegen ist es im Rahmen der Ermittlung der Ortspolynome durch die reale numerische Steuerung nicht möglich, Ortspolynome zu berücksichtigen, welche seitlich der momentanen Verfahrrichtung in der Nähe verlaufende Abschnitte der abzufahrenden Bahn beschreiben. Denn diese Ortspolynome sind den zu ermittelnden Ortspolynomen und dem durch sie definierten Abschnitt der Bahn zwar örtlich, nicht aber zeitlich benachbart. Die virtuelle numerische Steuerung ist hingegen - wiederum aufgrund des Umstands, dass eine Ausführung in Echtzeit nicht erforderlich ist - in der Lage, den bereits ermittelten Ortspolynomen jeweils einen zugehörigen Ort zuzuordnen und diese Ortspolynome einschließlich der jeweils zugehörigen Orte zu speichern. Die Recheneinrichtung, welche die virtuelle numerische Steuerung realisiert, ist daher in der Lage, bei der Ermittlung der jeweiligen Ortspolynome für einen bestimmten Abschnitt der Bahn jeweils einen zugehörigen Ort des Werkzeugs relativ zu dem Werkstück zu ermitteln und bei der Ermittlung der jeweiligen Ortspolynome diejenigen bereits ermittelten Ortspolynome zu berücksichtigen, deren zugehöriger Ort einen Abstand zu dem Ort des noch zu ermittelnden Ortspolynoms unterschreitet.

Dadurch können sozusagen "Nachbarschaftsbeziehungen" zwischen Ortspolynomen bzw. den entsprechenden Abschnitten der Bahn berücksichtigt werden.

Vorzugsweise sind der Recheneinrichtung einzuhaltende Toleranzen bekannt. In diesem Fall ist es möglich, dass die Recheneinrichtung die Ortspolynome derart ermittelt, dass eine Abweichung der durch die Ortspolynome definierten Kontur des Werkstücks von der herzustellenden Kontur innerhalb der einzuhaltenden Toleranzen liegt.

Die Ortspolynome können nach Bedarf bestimmt sein. In der Regel handelt es sich bei den Ortspolynomen mindestens um Polynome 3. Grades, meist sogar um Polynome 5. Grades oder 7. Grades. In aller Regel handelt es sich weiterhin um Polynome ungeraden Grades.

Die Aufgabe wird weiterhin durch ein Computerprogramm mit den Merkmalen des Anspruchs 7 gelöst. Erfindungsgemäß wird ein Computerprogramm der eingangs genannten Art derart ausgestaltet, dass die Abarbeitung des Maschinencodes durch die Recheneinrichtung bewirkt, dass die Recheneinrichtung ein erfindungsgemäßes Betriebsverfahren ausführt.

Die Aufgabe wird weiterhin durch eine Recheneinrichtung mit den Merkmalen des Anspruchs 8 gelöst. Erfindungsgemäß wird eine Recheneinrichtung der eingangs genannten Art mit einem erfindungsgemäßen Computerprogramm programmiert, so dass die Recheneinrichtung im Betrieb ein erfindungsgemäßes Betriebsverfahren ausführt.

Die Aufgabe wird weiterhin durch ein Teileprogramm mit den Merkmalen des Anspruchs 9 gelöst. Vorteilhafte Ausgestaltungen des Teileprogramms sind Gegenstand der abhängigen Ansprüche 10 und 11.

Erfindungsgemäß wird ein Teileprogramm der eingangs genannten Art dadurch ausgestaltet,
- dass die Datensätze für mehrere Dimensionen der Bewegung eines Werkzeugs einer von der numerischen Steuerung gesteuerten Werkzeugmaschine relativ zu einem Werkstück jeweils ein Ortspolynom umfassen und
- dass die Ortspolynome für aufeinanderfolgende Abschnitte eines Bahnparameters jeweils einen Verlauf der Bewegung in der jeweiligen Dimension als Funktion des Bahnparameters definieren.

Dadurch ist es möglich, der numerischen Steuerung optimierte Ortspolynome zur Verfügung zu stellen, welche die numerische Steuerung aufgrund der Beschränkungen in der Rechenleistung und des Umstands, dass eine Ermittlung in Echtzeit erfolgen muss, nicht ermitteln kann.

Es ist möglich, dass dem jeweiligen Datensatz eine jeweilige translatorische Wunschgeschwindigkeit zugeordnet ist und dass die dem jeweiligen Datensatz zugeordnete translatorische Wunschgeschwindigkeit ein Geschwindigkeitspolynom ist. In diesem Fall kann - eine entsprechende Festsetzung der translatorischen Wunschgeschwindigkeit durch die Recheneinrichtung vorausgesetzt - die numerische Steuerung das Geschwindigkeitspolynom direkt übernehmen.

Die Ortspolynome sollten, wie bereits in Verbindung mit dem Betriebsverfahren der Recheneinrichtung erwähnt, vorzugsweise mindestens Polynome 3. Grades sein.

Die Aufgabe wird weiterhin durch ein Steuerverfahren mit den Merkmalen des Anspruchs 12 gelöst. Vorteilhafte Ausgestaltungen des Steuerverfahrens sind Gegenstand der abhängigen Ansprüche 13 bis 15.

Erfindungsgemäß wird ein Steuerverfahren der eingangs genannten Art dadurch ausgestaltet,
- dass die Datensätze für mehrere Dimensionen der Bewegung des Werkzeugs relativ zum Werkstück jeweils ein Ortspolynom umfassen,
- dass die Ortspolynome für aufeinanderfolgende Abschnitte eines Bahnparameters jeweils einen Verlauf der Bewegung in der jeweiligen Dimension als Funktion des Bahnparameters definieren und
- dass die numerische Steuerung die Lagesollwerte für die Achsen anhand der durch das Teileprogramm vorgegebenen Ortspolynome ermittelt.

Die numerische Steuerung verwertet also die ihr vorgegebenen optimierten Ortspolynome direkt, ohne eigenständig eine Ermittlung von Ortspolynomen vorzunehmen. Die für die numerische Steuerung erforderliche Rechenleistung kann dadurch deutlich reduziert werden. Es ist zwar möglich, dass die numerische Steuerung in der Lage ist, derartige Ortspolynome eigenständig zu ermitteln. Diese Möglichkeit zur Ermittlung wird jedoch, sofern sie vorhanden ist, bei der Abarbeitung des erfindungsgemäßen Teileprogramms nicht genutzt.

In einer bevorzugten Ausgestaltung des Steuerverfahrens ist vorgesehen, dass dem jeweiligen Datensatz ein jeweiliges translatorisches Geschwindigkeitspolynom zugeordnet ist und dass die numerische Steuerung das jeweilige translatorische Geschwindigkeitspolynom als Geschwindigkeitspolynom übernimmt. Dadurch kann die für die numerische Steuerung erforderliche Rechenleistung nochmals deutlich reduziert werden. Wie zuvor ist zwar möglich, dass die numerische Steuerung in der Lage ist, ein derartiges Geschwindigkeitspolynom eigenständig zu ermitteln. Diese Möglichkeit zur Ermittlung wird jedoch, sofern sie vorhanden ist, bei der Abarbeitung des erfindungsgemäßen Teileprogramms nicht genutzt.

Die Ortspolynome sollten, wie bereits in Verbindung mit dem Betriebsverfahren der Recheneinrichtung erwähnt, vorzugsweise mindestens Polynome 3. Grades sein.

Das der numerischen Steuerung vorgegebene erfindungsgemäße Teileprogramm kann von der numerischen Steuerung - mit Ausnahme des andersartigen Aufbaus der Datensätze des Teileprogramms - wie ein konventionelles Teileprogramm abgearbeitet werden. Insbesondere ist es also weiterhin möglich, dass die numerische Steuerung im Rahmen der Ermittlung der Lagesollwerte für die Achsen zusätzlich eine Vorgabe einer Bedienperson zur Änderung einer translatorischen Geschwindigkeit, mit der das Werkzeug relativ zu dem Werkstück entlang der Bahn verfahren werden soll, von der Bedienperson vorgegebene oder messtechnisch erfasste Korrekturen und/oder Freigaben und Sperren durch eine speicherprogrammierbare Steuerung berücksichtigt.

Die Aufgabe wird weiterhin durch ein Betriebssystem mit den Merkmalen des Anspruchs 16 gelöst. Erfindungsgemäß wird ein Betriebssystem der eingangs genannten Art derart ausgestaltet, dass die Abarbeitung des Maschinencodes durch die numerische Steuerung bewirkt, dass die numerische Steuerung ein erfindungsgemäßes Steuerverfahren ausführt.

Die Aufgabe wird weiterhin durch eine numerische Steuerung mit den Merkmalen des Anspruchs 17 gelöst. Erfindungsgemäß wird eine numerische Steuerung der eingangs genannten Art mit einem erfindungsgemäßen Betriebssystem programmiert, so dass die numerische Steuerung im Betrieb ein erfindungsgemäßes Steuerverfahren ausführt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Werkzeugmaschine und eine numerische Steuerung des Standes der Technik,
- FIG 2: ein Teileprogramm des Standes der Technik,
- FIG 3: eine Abfolge von Punkten und Abschnitte einer Bahn im Raum,
- FIG 4: eine Recheneinrichtung,
- FIG 5: ein Ablaufdiagramm,
- FIG 6: ein erfindungsgemäßes Teileprogramm,
- FIG 7: eine Werkzeugmaschine und eine erfindungsgemäße numerische Steuerung,
- FIG 8: eine Werkzeugmaschine und eine weitere erfindungsgemäße numerische Steuerung und
- FIG 9: ein weiteres erfindungsgemäßes Teileprogramm.

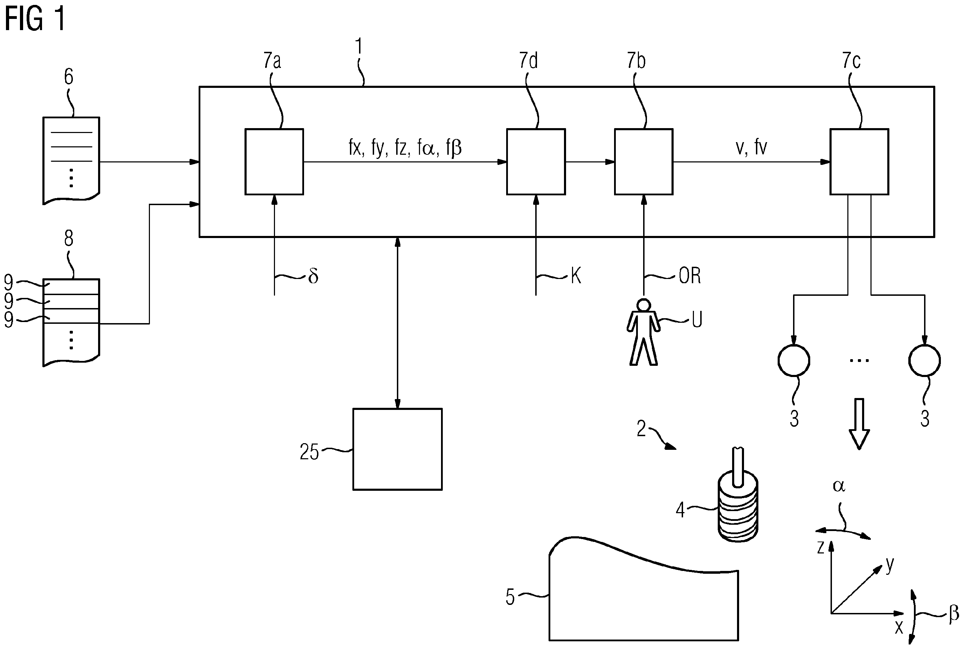

Erläuterung der vorliegenden Erfindung wird nachstehend zunächst in Verbindung mit FIG 1 die Vorgehensweise erläutert, mit der eine konventionelle numerischen Steuerung 1 - also eine reale numerische Steuerung des Standes der Technik - betrieben wird.

Gemäß FIG 1 steuert eine konventionelle numerische Steuerung 1 eine Werkzeugmaschine 2. Insbesondere bestimmt die konventionelle numerische Steuerung 1 Abfolgen von Lagesollwerten für Achsen 3 der Werkzeugmaschine 2. Durch die Abfolge von Lagesollwerten wird ein Werkzeug 4 der Werkzeugmaschine 2 - beispielsweise ein Fräser - entsprechend der Abfolge von Lagesollwerten relativ zu einem zu bearbeitenden Werkstück 5 translatorisch positioniert (beispielsweise in den kartesischen Koordinaten x, y und z). Die Abfolge der Lagesollwerte definiert eine Bahn, entlang derer das Werkzeug 4 relativ zum Werkstück 5 verfahren wird. Soweit erforderlich, erfolgt zusätzlich zum Abfahren der Bahn auch eine rotatorische Orientierung des Werkzeugs 4 relativ zum Werkstück 5 (beispielsweise in den Orientierungen α und β). Die Abfolge der Lagesollwerte ist auf die Zeit bezogen. Mit jedem Arbeitstakt wird jeweils ein neuer Lagesollwert an die jeweilige Achse 3 ausgegeben. Der Arbeitstakt liegt meist im Bereich unterhalb 1 ms, beispielsweise bei 250 µs oder 125 ps.

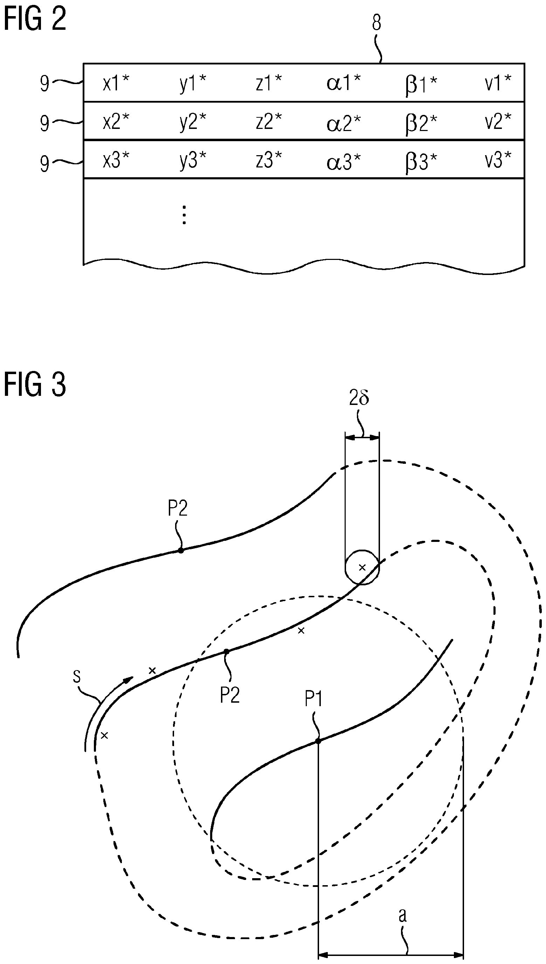

Die konventionelle numerische Steuerung 1 ist mit einem konventionellen Betriebssystem 6 programmiert. Aufgrund der Programmierung mit dem konventionellen Betriebssystem 6 implementiert die konventionelle numerische Steuerung 1 in funktionaler Hinsicht eine Mehrzahl von Blöcken 7. Die Blöcke 7 sind also in Software realisiert. Die Blöcke 7 sind in FIG 2 jeweils mit einem kleinen Buchstaben ergänzt, um sie bei Bedarf voneinander unterscheiden zu können.

Zur Ermittlung der Bahn nimmt die konventionelle numerische Steuerung 1 ein konventionelles Teileprogramm 8 entgegen. Das Teileprogramm 8 definiert indirekt eine Kontur, in welche das Werkstück 5 durch die Bearbeitung durch das Werkzeug 4 gebracht werden soll. Es umfasst - siehe auch FIG 2 - eine Abfolge von Datensätzen 9. Die Datensätze 9 enthalten für mehrere Dimensionen - beispielsweise für die translatorischen Richtungen x, y und z und zusätzlich für Orientierungen α, β - jeweils einen Lagesollwert. Die Lagesollwerte sind in FIG 2 zum einen mit einem "*" ergänzt, um anzudeuten, dass es sich um Sollwerte handelt. Zum anderen sind die Lagesollwerte mit einer jeweiligen Zahl ergänzt, um ihre Zugehörigkeit entsprechend der Reihenfolge der Datensätze 9 anzudeuten. Die Datensätze 9 definieren entsprechend der Darstellung in FIG 3 eine Abfolge von Punkten im Raum und damit die Bahn. FIG 3 zeigt in durchgezogenen Linien bestimmte Abschnitte dieser Bahn. Die kleinen Kreuzchen sollen die einzelnen Punkte darstellen, wie sie durch die Datensätze 9 definiert sind. Die gestrichelten Linien können ebenfalls Bestandteil der Bahn sein, können aber auch anderweitig bestimmt sein. Entscheidend ist im vorliegenden Fall lediglich, dass zuerst der in FIG 3 linke Abschnitt der Bahn abgefahren wird, dann der mittlere Abschnitt und danach der rechte Abschnitt.

Die konventionelle numerische Steuerung 1 liest die Datensätze 9 aus dem Teileprogramm 8 aus. In dem Ermittlungsblock 7a ermittelt die konventionelle numerische Steuerung 1 anhand jeweils einer Gruppe von Datensätzen 9 ein jeweiliges Polynom fx, fy, fz, fα, fβ eines gemeinsamen Bahnparameters s, beispielsweise des im dreidimensionalen Raum translatorisch abgefahrenen Weges. Die Polynome fx, fy, fz, fα, fβ werden üblicherweise als Splines bezeichnet. Sie sind auf jeweils eine Dimension x, y und z, gegebenenfalls auch α und β, bezogen und beschreiben in einem jeweiligen Abschnitt des Bahnparameters s als Funktion des Bahnparameters s den Verlauf in der jeweiligen Dimension. Die Abschnitte des Bahnparameters s folgen aufeinander. Es handelt sich um Abfolgen von Ortssollwerten. Die entsprechenden Polynome fx, fy, fz, fα, fβ werden daher nachfolgend als Ortspolynome bezeichnet.

Weiterhin sind der konventionellen numerischen Steuerung 1 Toleranzen bekannt, die bei der Bearbeitung des Werkstücks 5 durch das Werkzeug 4 eingehalten werden sollen. Beispielsweise kann der konventionellen numerischen Steuerung 1 vorgegeben sein, dass eine von dem Werkzeug 4 relativ zu dem Werkstück 5 tatsächlich abgefahrenen Bahn von einer durch die Datensätze 9 definierten idealen Kontur maximal einen Abstand δ (siehe FIG 3) aufweisen darf. Die konventionelle numerische Steuerung 1 ermittelt die Polynome fx, fy, fz, fα, fβ derart, dass die vorgegebenen Toleranzen eingehalten werden.

In dem Ermittlungsblock 7b ermittelt die konventionelle numerische Steuerung 1 für die für einen bestimmten Datensatz 9 ermittelten Ortspolynome fx, fy, fz, fα, fβ eine jeweilige translatorische Geschwindigkeit v, mit der der durch das jeweilige Ortspolynom fx, fy, fz, fα, fβ festgelegte Abschnitt der Bahn abgefahren werden soll. Mit dieser Geschwindigkeit v soll sich das Werkzeug 4 (genauer: dessen TCP = tool center point) relativ zum Werkstück 5 translatorisch bewegen. Die translatorische Geschwindigkeit v ist - ebenso wie die in dem Ermittlungsblock 7a ermittelten Ortspolynome fx, fy, fz, fα, fβ - ebenfalls ein Polynom fv des Bahnparameters s. Es wird daher nachstehend als Geschwindigkeitspolynom bezeichnet.

Die konventionelle numerische Steuerung 1 berücksichtigt bei der Ermittlung der Geschwindigkeit v (genauer: des Geschwindigkeitspolynoms fv) in dem Ermittlungsblock 7b zum einen eine Wunschgeschwindigkeit v*, welche demjenigen Datensatz 9 zugeordnet ist, der sich in der Mitte des durch die jeweiligen Ortspolynome fx, fy, fz, fα, fβ definierten Abschnitts der Bahn befindet. Weiterhin sind der konventionellen numerischen Steuerung 1 jedoch auch Dynamikgrenzen der Werkzeugmaschine 2 (insbesondere die maximal möglichen Geschwindigkeiten, die maximal möglichen Beschleunigungen und die maximal möglichen Rucke) und - sofern erforderlich - eine kinematische Transformation der Werkzeugmaschine 2 bekannt. Sofern - soweit erforderlich, unter Berücksichtigung der kinematischen Transformation - die Dynamikgrenzen der Werkzeugmaschine 2 eingehalten werden können, übernimmt die konventionelle numerische Steuerung 1 nach Möglichkeit die Wunschgeschwindigkeit v*. Wenn hingegen die Dynamikgrenzen der Werkzeugmaschine 2 nicht eingehalten werden können, reduziert die konventionelle numerische Steuerung 1 die Geschwindigkeit v, so dass die Dynamikgrenzen eingehalten werden. Sofern ein äußerer Eingriff erfolgt, insbesondere wenn von einer Bedienperson U - beispielsweise durch Vorgabe eines Override OR - eine Anpassung der Geschwindigkeit angefordert wird, berücksichtigt die konventionelle numerische Steuerung 1 weiterhin auch diesen Eingriff und passt die Geschwindigkeit v entsprechend an.

In dem Ermittlungsblock 7c ermittelt die konventionelle numerische Steuerung 1 sodann die Lagesollwerte für die Achsen 3 und steuert die Achsen 3 entsprechend an. Das Werkzeug 4 der Werkzeugmaschine 2 wird dadurch relativ zu dem Werkstück 5 entsprechend der durch das konventionelle Teileprogramm 8 definierten Bahn verfahren.

Der Aufbau und die Wirkungsweise der konventionellen numerischen Steuerung 1 sind Fachleuten allgemein bekannt und vertraut.

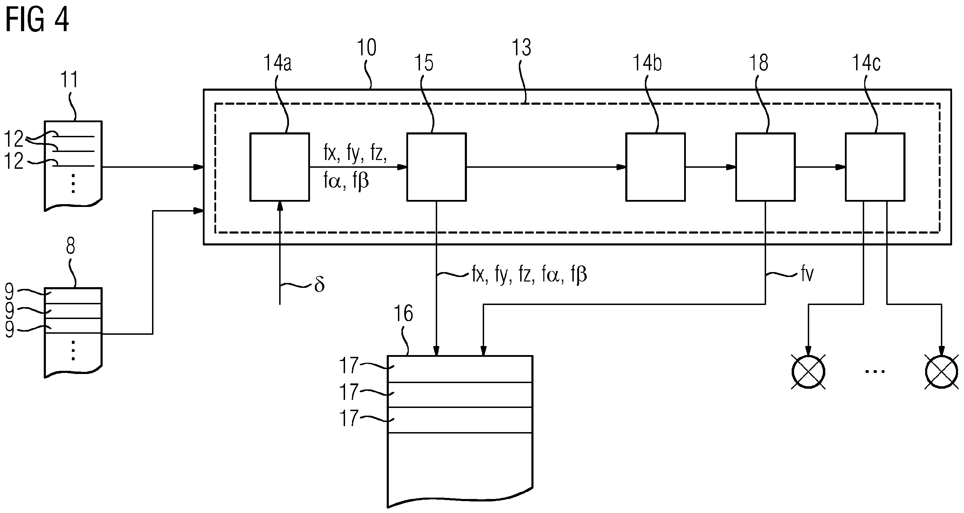

Zur Implementierung der vorliegenden Erfindung wird entsprechend der Darstellung in FIG 4 eine Recheneinrichtung 10 mit einem Computerprogramm 11 programmiert. Das Computerprogramm 11 umfasst Maschinencode 12, der von der Recheneinrichtung 10 abarbeitbar ist. Die Abarbeitung des Maschinencodes 12 durch die Recheneinrichtung 10 bewirkt, dass die Recheneinrichtung 10 ein Betriebsverfahren ausführt, das nachstehend näher erläutert wird.

Durch die Ausführung des Maschinencodes 12 implementiert die Recheneinrichtung 10, wie in FIG 4 dargestellt ist, eine virtuelle numerische Steuerung 13. Die virtuelle numerische Steuerung 13 umfasst virtuelle Ermittlungsblöcke 14. Die virtuellen Ermittlungsblöcke 14 sind also - ebenso wie die gesamte virtuelle numerische Steuerung 13 - in Software realisiert. Die virtuellen Ermittlungsblöcke 14 sind in FIG 4 jeweils mit einem kleinen Buchstaben ergänzt, um sie bei Bedarf voneinander unterscheiden zu können.

Die Funktion der virtuellen Ermittlungsblöcke 14 entspricht im Kern der Funktion des jeweils korrespondierenden realen Blocks 7 der konventionellen numerischen Steuerung 1. Insbesondere kann die virtuelle numerische Steuerung 13 dieselben konventionellen Datensätze 9 des konventionellen Teileprogramms 8 entgegennehmen und mittels des virtuellen Ermittlungsblocks 14a die zugehörigen Ortspolynome fx, fy, fz, fα, fβ für die verschiedenen Dimensionen ermitteln. Weiterhin kann die virtuelle numerische Steuerung 13 mittels des virtuellen Ermittlungsblocks 14b eine translatorische Geschwindigkeit v (genauer: das entsprechende Geschwindigkeitspolynom fv) ermitteln, mit der der durch die jeweiligen Ortspolynome fx, fy, fz, fα, fβ festgelegte Abschnitt der Bahn abgefahren werden soll. Schließlich kann die virtuelle numerische Steuerung 13 mittels des virtuellen Ermittlungsblocks 14c die Lagesollwerte für die Achsen 3 ermitteln.

Im Unterschied zur konventionellen numerischen Steuerung 1 steuert virtuelle numerische Steuerung 13 jedoch nicht reale Achsen 3 an. Im Gegensatz zur konventionellen numerischen Steuerung 1 muss die virtuelle numerische Steuerung 13 ihre Aufgaben mittels der Ermittlungsblöcke 14a bis 14c daher nicht in Echtzeit ausführen. Insbesondere ist es somit möglich, in den virtuellen Ermittlungsblöcken 14a und 14b und gegebenenfalls auch im Ermittlungsblock 14c Algorithmen zu implementieren, deren Ausführung zwar erheblich zeitaufwendiger ist, im Gegenzug aber optimierte Ergebnisse liefert. Auch kann die Recheneinrichtung 10 externe Instanzen nutzen, welche mit nicht echtzeitfähigen Algorithmen arbeiten. All dies ist unkritisch, eben weil keine Ansteuerung von realen Achsen 3 erfolgt.

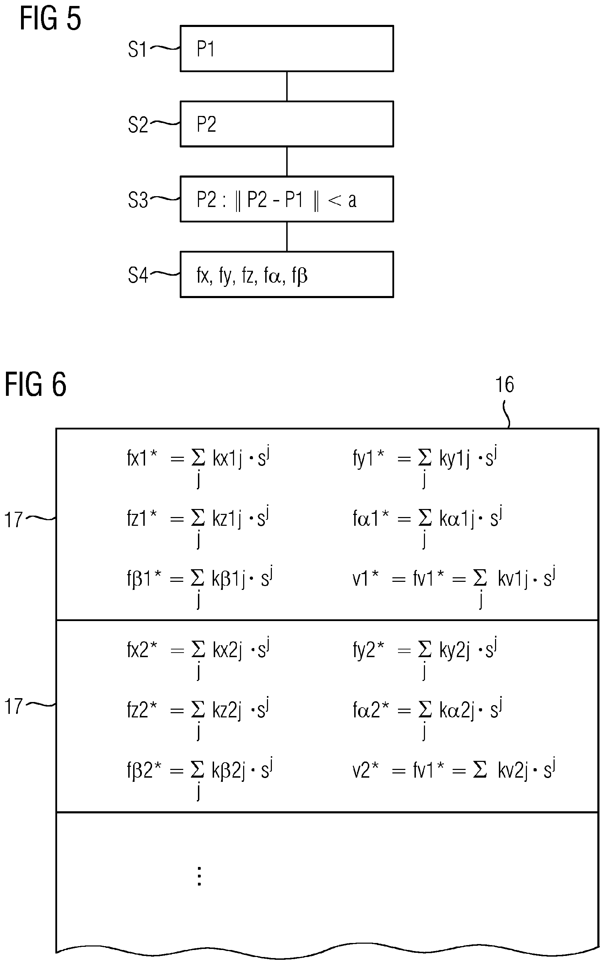

Beispielsweise ist es möglich, dass die Recheneinrichtung 10 entsprechend der Darstellung in FIG 5 in einem Schritt S1 mittels des virtuellen Ermittlungsblocks 14a bei der Ermittlung der Ortspolynome fx, fy, fz, fα, fβ für einen bestimmten Abschnitt der Bahn - beispielsweise bei der Ermittlung des in FIG 3 rechten Abschnitts der Bahn - zunächst einen Ort P1 des Werkzeugs 4 relativ zum Werkstück 5 ermittelt. Der Ort ist rein translatorisch bestimmt, umfasst also zwar die Position, aber nicht die Orientierung des Werkzeugs 4 relativ zum Werkstück 5. Bei dem Ort P1 kann es sich beispielsweise entsprechend der Darstellung in FIG 3 um denjenigen Ort handeln, der in die Mitte des entsprechenden Abschnitts der Bahn fällt, wie er durch die für die jeweiligen Achsen 3 ermittelten Ortspolynome fx, fy, fz, fα, fβ definiert ist. Diesen Ort P1 kann die Recheneinrichtung 10 dem jeweiligen Abschnitt der Bahn zuordnen. In einem Schritt S2 kann die Recheneinrichtung 10 sodann für diejenigen Ortspolynome fx, fy, fz, fα, fβ, diese bereits ermittelt hat, deren zugehörige Orte P2 (siehe FIG 3) ermitteln. In einem Schritt S3 kann die Recheneinrichtung 10 sodann diejenigen Orte P2 selektieren, deren Abstand von dem Ort P1 unterhalb eines vorgegebenen Abstands a (siehe FIG 3) liegt. In einem Schritt S4 kann die Recheneinrichtung 10 schließlich bei der Ermittlung der Ortspolynome fx, fy, fz, fα, fβ, für die der Ort P1 bestimmt wurde, die Ortspolynome fx, fy, fz, fα, fβ derjenigen Orte P2 berücksichtigen, die sie im Schritt S3 selektiert hat. Es sind aber auch andere Arten der Optimierung möglich.

Zusätzlich implementiert die Recheneinrichtung 10 aufgrund der Programmierung mit dem Computerprogramm 11 in der virtuellen numerischen Steuerung 13 einen Ausleitungsblock 15. Mittels des Ausleitungsblocks 15 leitet die Recheneinrichtung 10 die Ortspolynome fx, fy, fz, fα, fβ, die mittels des virtuellen Ermittlungsblocks 14a ermittelt werden, aus und erstellt so ein modifiziertes Teileprogramm 16, also ein erfindungsgemäßes Teileprogramm 16. Dieses Teileprogramm 16 umfasst entsprechend der Darstellung in FIG 6 - analog zum konventionellen Teileprogramm 8 - eine Abfolge von sequenziell nacheinander abzuarbeitenden Datensätzen 17. Im Gegensatz zu den konventionellen Datensätzen 9 umfassen die Datensätze 17 für die Dimensionen jedoch nicht jeweils einen einzelnen Lagesollwert, sondern jeweils ein Ortspolynom fx, fy, fz, fα, fβ, nämlich das jeweilige im virtuellen Ermittlungsblock 14a ermittelte Ortspolynom fx, fy, fz, fα, fβ. Weiterhin sind die Ortspolynome fx, fy, fz, fα, fβ entsprechend der Darstellung in FIG 6 mindestens Polynome 3. Grades. Oftmals handelt es sich sogar um Polynome 5. Grades oder 7. Grades, in aller Regel jedoch stets um Polynome ungeraden Grades. Im Rahmen der Ermittlung der Ortspolynome fx, fy, fz, fα, fβ sind auch die einzuhaltenden Toleranzen berücksichtigt.

Analog zu den konventionellen Datensätzen 9 kann den Datensätzen 17 ebenfalls jeweils eine Wunschgeschwindigkeit v* zugeordnet sein. Im einfachsten Fall kann die Wunschgeschwindigkeit v* einfach aus dem korrespondierenden konventionellen Datensatz 9 übernommen werden. In diesem Fall kann das erfindungsgemäße Teileprogramm 16 zwar bezüglich der abzufahrenden Bahn optimiert sein, nicht aber bezüglich der Wunschgeschwindigkeit v*. Das erfindungsgemäße Teileprogramm 16 ist jedoch maschinenunabhängig, also unabhängig davon, welche Werkzeugmaschine 2 gesteuert wird. Alternativ ist es möglich, zusätzlich auch einen weiteren Ausleitungsblock 18 vorzusehen. In diesem Fall können mittels des weiteren Ausleitungsblocks 18 die in dem virtuellen Ermittlungsblock 14b ermittelten Geschwindigkeitspolynome fv ausgeleitet und den entsprechenden Datensätzen 17 des erfindungsgemäßen Teileprogramms 16 zugeordnet werden. In diesem Fall sind also der Recheneinrichtung 10 die maximal mögliche Dynamik der Werkzeugmaschine 2 und deren kinematische Transformation bekannt. Da weiterhin die Recheneinrichtung 10 in dem virtuellen Ermittlungsblock 14b unter anderem die Dynamikgrenzen und die kinematische Transformation berücksichtigt, sind in diesem Fall bei der translatorischen Wunschgeschwindigkeit v* der Datensätze 17 auch die mögliche Dynamik der Werkzeugmaschine 2 und die kinematische Transformation mit berücksichtigt. In diesem Fall ist das erfindungsgemäße Teileprogramm 16 konkret für die Steuerung der Werkzeugmaschine 2 von FIG 1 optimiert.

Eine Berücksichtigung des Overrides OR ist nicht vorgesehen und auch nicht sinnvoll. Denn der Override OR wird stets von der Bedienperson U im Betrieb der realen Werkzeugmaschine 2 nach Bedarf vorgegeben.

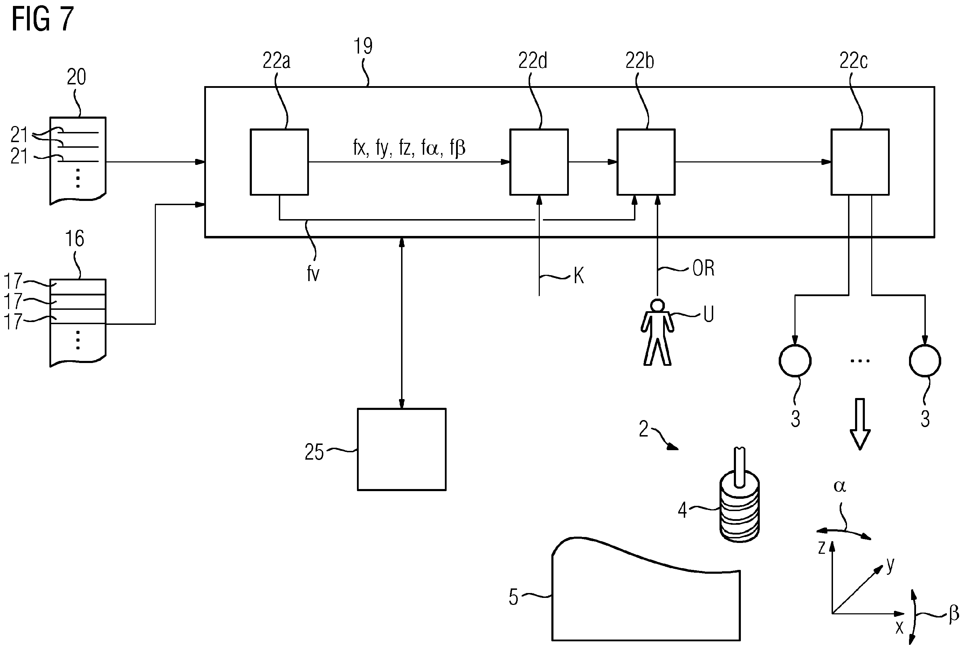

Das erfindungsgemäße Teileprogramm 16 kann entsprechend der Darstellung in FIG 7 einer erfindungsgemäßen numerischen Steuerung 19 zugeführt werden. Die erfindungsgemäße numerische Steuerung 19 steuert - analog zur konventionellen numerischen Steuerung 1 die Werkzeugmaschine 2. Insbesondere bestimmt auch die erfindungsgemäße numerische Steuerung 19 Abfolgen von Lagesollwerten für die Achsen 3 der Werkzeugmaschine 2. Auch wird durch die Abfolge von Lagesollwerten das Werkzeug 4 der Werkzeugmaschine 2 entsprechend der Abfolge von Lagesollwerten relativ zu dem zu bearbeitenden Werkstück 5 translatorisch positioniert. Die Abfolge der Lagesollwerte definiert somit ebenso wie bei der konventionellen numerischen Steuerung 1 eine Bahn, entlang derer das Werkzeug 4 relativ zum Werkstück 5 verfahren wird. Soweit erforderlich, erfolgt auch bei der erfindungsgemäßen numerischen Steuerung 19 zusätzlich zum Abfahren der Bahn auch eine rotatorische Orientierung des Werkzeugs 4 relativ zum Werkstück 5.

Die erfindungsgemäße numerische Steuerung 19 kann, soweit es ihre Hardware betrifft, auf die gleiche Art und Weise aufgebaut sein wie die konventionelle numerische Steuerung 1. Die erfindungsgemäße numerische Steuerung 19 ist jedoch mit einem erfindungsgemäßen Betriebssystem 20 programmiert. Das erfindungsgemäße Betriebssystem 20 umfasst Maschinencode 21, der von der erfindungsgemäßen numerischen Steuerung 19 abarbeitbar ist. Aufgrund der Programmierung mit dem erfindungsgemäßen Betriebssystem 20 bzw. hiermit gleichwertig der Abarbeitung des Maschinencodes 21 implementiert die erfindungsgemäße numerische Steuerung 19 in funktionaler Hinsicht eine Anzahl von Blöcken 22. Die Blöcke 22 sind also in Software realisiert. Die Blöcke 22 sind in FIG 7 jeweils mit einem kleinen Buchstaben ergänzt, um sie bei Bedarf voneinander unterscheiden zu können.

Nachfolgend wird zunächst angenommen, dass das erfindungsgemäße Teileprogramm 16 zwar die erfindungsgemäß ermittelten Ortspolynome fx, fy, fz, fα, fβ enthält und den Ortspolynomen fx, fy, fz, fα, fβ jeweils die Wunschgeschwindigkeit v* zugeordnet ist, die Wunschgeschwindigkeit v* jedoch nicht unter Berücksichtigung der Toleranzen und der maximal möglichen Dynamik der Werkzeugmaschine 2 und gegebenenfalls der kinematischen Transformation ermittelt wurde.

In diesem Fall nimmt die erfindungsgemäße numerische Steuerung 19 über den Block 22a das erfindungsgemäße Teileprogramm 16 entgegen, liest die Datensätze 17 aus dem erfindungsgemäßen Teileprogramm 16 aus und arbeitet sie sequenziell nacheinander ab. Die erfindungsgemäße numerische Steuerung 19 führt die in den Datensätzen 17 definierten Ortspolynome fx, fy, fz, fα, fβ und die Wunschgeschwindigkeit v* dem Ermittlungsblock 22b zu. Der Ermittlungsblock 22b korrespondiert mit dem Ermittlungsblock 7b der konventionellen numerischen Steuerung 1. Dort erfolgt also die Ermittlung der translatorischen Geschwindigkeit v (genauer: des Geschwindigkeitspolynoms fv), mit der der durch die Ortspolynome fx, fy, fz, fα, fβ festgelegte Abschnitt der Bahn abgefahren werden soll. Mit dieser Geschwindigkeit v soll sich das Werkzeug 4 (genauer: dessen TCP = tool center point) relativ zum Werkstück 5 translatorisch bewegen. Bezüglich der weiteren Funktionalitäten des Ermittlungsblocks 22b wird auf die obigen Ausführungen zum Ermittlungsblock 7b der konventionellen numerischen Steuerung 1 verwiesen. Der Ermittlungsblock 22c korrespondiert mit dem Ermittlungsblock 7c der konventionellen numerischen Steuerung 1. In dem Ermittlungsblock 22c ermittelt die erfindungsgemäße numerische Steuerung 19 sodann die Lagesollwerte für die Achsen 3 und steuert die Achsen 3 entsprechend an. Das Werkzeug 4 der Werkzeugmaschine wird dadurch relativ zu dem Werkstück 5 entsprechend der durch das erfindungsgemäße Teileprogramm 16 definierten Bahn verfahren.

Nachfolgend wird nunmehr angenommen, dass das erfindungsgemäße Teileprogramm 16 nicht nur die erfindungsgemäß ermittelten Ortspolynome fx, fy, fz, fα, fβ enthält, sondern den Ortspolynomen fx, fy, fz, fα, fβ auch jeweils ein Geschwindigkeitspolynom fv zugeordnet ist, das unter Berücksichtigung der maximal möglichen Dynamik der Werkzeugmaschine 2 und - soweit erforderlich - auch der kinematischen Transformation der Werkzeugmaschine 2 ermittelt wurde.

Auch in diesem Fall nimmt die erfindungsgemäße numerische Steuerung 19 über den Block 22a das erfindungsgemäße Teileprogramm 16 entgegen und liest die Datensätze 17 aus dem erfindungsgemäßen Teileprogramm 16 aus. Die erfindungsgemäße numerische Steuerung 19 führt die in den Datensätzen 17 definierten Ortspolynome fx, fy, fz, fα, fβ und die Geschwindigkeitspolynome fv weiterhin dem Ermittlungsblock 22b zu. Der Ermittlungsblock 22b korrespondiert in diesem Fall jedoch lediglich noch mit dem Teil des Ermittlungsblocks 7b der konventionellen numerischen Steuerung 1, in dem die Berücksichtigung des Override OR erfolgt. Im übrigen wird das Geschwindigkeitspolynom fv direkt übernommen. In dem Ermittlungsblock 22c ermittelt die erfindungsgemäße numerische Steuerung 19 sodann die Lagesollwerte für die Achsen 3 und steuert die Achsen 3 entsprechend an. Das Werkzeug 4 der Werkzeugmaschine wird dadurch relativ zu dem Werkstück 5 entsprechend der durch das erfindungsgemäße Teileprogramm 16 definierten Bahn verfahren.

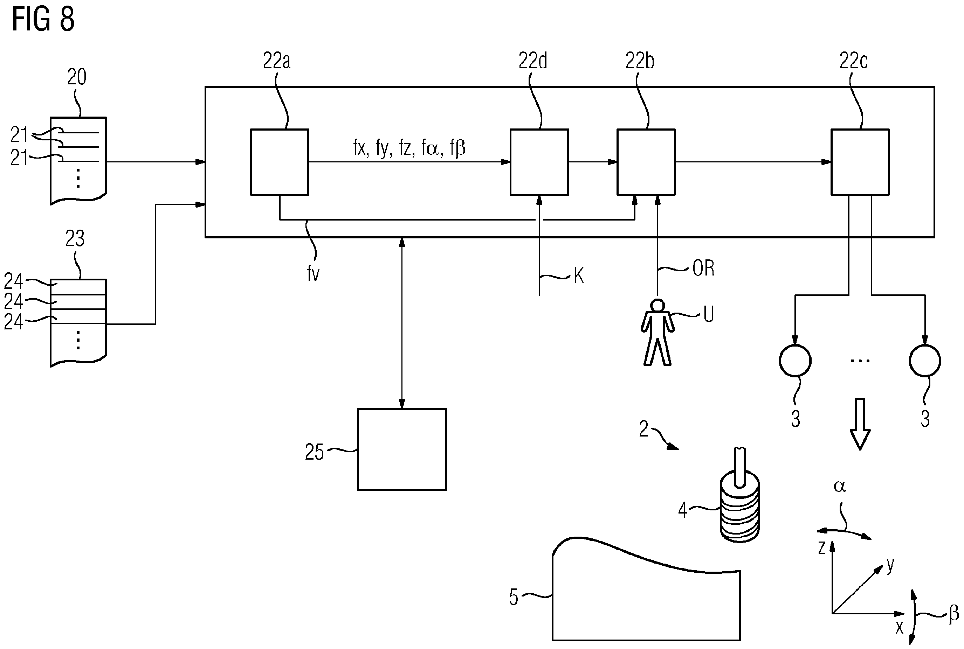

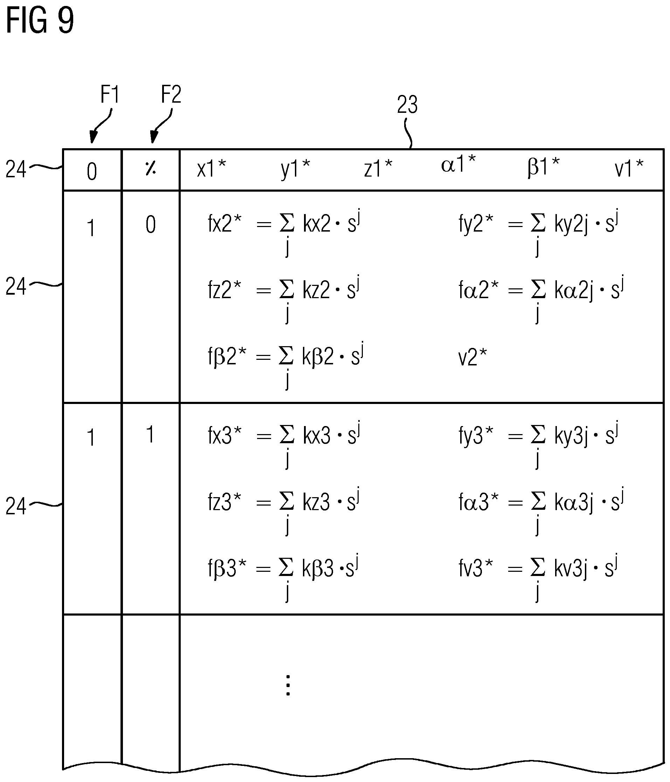

Es ist entsprechend der Darstellung in FIG 8 auch möglich, einer erfindungsgemäßen numerischen Steuerung 19 ein Teileprogramm 23 zuzuführen, dessen Datensätze 24 in manchen Abschnitten des Teileprogramms 23 als konventionelle Datensätze ausgebildet sind und in anderen Abschnitten als erfindungsgemäße Datensätze ausgebildet sind. Beispielsweise können die Datensätze 24 eines derartigen Teileprogramms 23 entsprechend der Darstellung in FIG 9 zwei Flags F1, F2 umfassen. Je nachdem, ob bei einem bestimmten Datensatz 24 das Flag F1 den Wert 0 oder den Wert 1 aufweist, handelt es sich bei dem entsprechenden Datensatz 24 um einen konventionellen Datensatz oder um einen erfindungsgemäßen Datensatz. Im Falle eines erfindungsgemäßen Datensatzes ist dem jeweiligen Datensatz 24 je nachdem, ob das ihm zugeordnete Flag F2 den Wert 0 oder den Wert 1 aufweist, entweder eine Wunschgeschwindigkeit v* analog zu einem konventionellen Datensatz oder ein unter Berücksichtigung der maximal möglichen Dynamik und gegebenenfalls der kinematischen Transformation der Werkzeugmaschine 2 ermitteltes Geschwindigkeitspolynom fv zugeordnet.

In diesem Fall erfolgt im Block 22a zusätzlich eine entsprechende Prüfung der Flags F1, F2. Je nachdem, welche Werte die beiden Flags F1, F2 aufweisen, wird bezüglich des entsprechenden Datensatzes 24 entweder eine Vorgehensweise ergriffen, wie sie obenstehend in Verbindung mit den FIG 1 bis 3 bezüglich der konventionellen numerischen Steuerung 1 erläutert wurde, oder die eine oder die andere der beiden Vorgehensweisen ergriffen, die obenstehend in Verbindung mit FIG 7 bezüglich der erfindungsgemäßen numerischen Steuerung 19 erläutert wurden.

Wie bereits erwähnt, ist die konventionelle numerische Steuerung 1 in der Lage, im Rahmen der Ermittlung der Lagesollwerte für die Achsen 3 zusätzlich eine Vorgabe der Bedienperson U zur Änderung der translatorischen Geschwindigkeit v, mit der das Werkzeug 4 relativ zu dem Werkstück 5 entlang der Bahn verfahren werden soll, zu berücksichtigen. Dies ist entsprechend den obenstehenden Ausführungen auch bei der erfindungsgemäßen numerischen Steuerung 19 möglich. Dies ist insbesondere deshalb auch möglich, weil die virtuelle numerische Steuerung 13 die Ortspolynome fx, fy, fz, fα, fβ und die Geschwindigkeitspolynome fv auf vom Ansatz her gleiche Art und Weise wie die konventionelle numerische Steuerung 1 ermittelt und die Ortspolynome fx, fy, fz, fα, fβ und die Geschwindigkeitspolynome fv des erfindungsgemäßen Teileprogramms 16 daher von ihrer Struktur her gesehen völlig gleichartig zu auf konventionelle Art und Weise ermittelten Ortspolynomen fx, fy, fz, fα, fβ und Geschwindigkeitspolynomen fv sind.

Die Vorgabe der Bedienperson U zur Anpassung der translatorischen Geschwindigkeit v sind jedoch nicht die einzigen Vorgaben, welche der konventionellen numerischen Steuerung 1 vorgegeben werden.

Zum einen werden der konventionellen numerischen Steuerung 1 weiterhin auch Korrekturen K vorgegeben. Die Korrekturen K können beispielsweise Abmessungen des Werkzeugs 4 betreffen, beispielsweise einen aufgrund von Verschleiß verringerten Radius eines Fräsers. Auch können die Korrekturen K beispielsweise leichte Fehlpositionierungen des Werkstücks 5 betreffen. Die Korrekturen K können nach Bedarf messtechnisch erfasst und der konventionellen numerischen Steuerung 1 auf diese Art und Weise zu geführt werden oder der konventionellen numerischen Steuerung 1 von der Bedienperson U vorgegeben werden. Derartige Korrekturen K werden von der konventionellen numerischen Steuerung 1 entsprechend der Darstellung in FIG 1 in einem Korrekturblock 7d berücksichtigt, der zwischen dem Ermittlungsblock 7a und 7d angeordnet ist.

Derartige Korrekturen K können auch von der erfindungsgemäßen numerischen Steuerung 19 in einem korrespondierenden Korrekturblock 22d berücksichtigt werden. Der Grund liegt - ebenso wie bei der möglichen Berücksichtigung des Overrides OR - darin, dass die virtuelle numerische Steuerung 13 die Ortspolynome fx, fy, fz, fα, fβ und die Geschwindigkeitspolynome fv auf vom Ansatz her gleiche Art und Weise wie die konventionelle numerische Steuerung 1 ermittelt und die Ortspolynome fx, fy, fz, fα, fβ und die Geschwindigkeitspolynome fv des erfindungsgemäßen Teileprogramms 16 daher von ihrer Struktur her gesehen völlig gleichartig zu auf konventionelle Art und Weise ermittelten Ortspolynomen fx, fy, fz, fα, fβ und Geschwindigkeitspolynomen fv sind.

Zum anderen berücksichtigt die konventionelle numerische Steuerung 1 im Rahmen der Ermittlung der Lagesollwerte Freigaben und Sperren durch eine speicherprogrammierbare Steuerung 25. Die speicherprogrammierbare Steuerung 25 kann beispielsweise überwachen, ob Personen einen Arbeitsbereich der Werkzeugmaschine 2 betreten und der konventionellen numerischen Steuerung 1 daraufhin ein Warnsignal übermitteln. Aufgrund des Warnsignals kann die konventionelle numerische Steuerung 1 beispielsweise entweder unverzüglich eine Unterbrechung der Bearbeitung des Werkstücks 5 durch das Werkzeug 4 einleiten oder eine Verfahrgeschwindigkeit des Werkzeugs 4 und/oder des Werkstücks 5 deutlich begrenzen. Derartige Freigaben und Sperren können auch von der erfindungsgemäßen numerischen Steuerung 19 weiterhin berücksichtigt werden. Der Grund liegt wie zuvor darin, dass die virtuelle numerische Steuerung 13 die Ortspolynome fx, fy, fz, fα, fβ und die Geschwindigkeitspolynome fv auf vom Ansatz her gleiche Art und Weise wie die konventionelle numerische Steuerung 1 ermittelt und die Ortspolynome fx, fy, fz, fα, fβ und die Geschwindigkeitspolynome fv des erfindungsgemäßen Teileprogramms 16 daher von ihrer Struktur her gesehen völlig gleichartig zu auf konventionelle Art und Weise ermittelten Ortspolynomen fx, fy, fz, fα, fβ und Geschwindigkeitspolynomen fv sind.

Zusammengefasst betrifft die vorliegende Erfindung somit folgenden Sachverhalt:
Eine Recheneinrichtung 10 erstellt anhand einer herzustellenden Kontur eines Werkstücks 5 ein Teileprogramm 16 für eine numerische Steuerung 19. Die Recheneinrichtung 10 erstellt das Teileprogramm 16 in der Form, dass es eine Abfolge von von der numerischen Steuerung 19 sequenziell nacheinander abzuarbeitenden Datensätzen 17 umfasst. Die Datensätze 17 umfassen für mehrere Dimensionen der Bewegung eines Werkzeugs 4 einer von der numerischen Steuerung 19 gesteuerten Werkzeugmaschine 2 relativ zum Werkstück 5 jeweils ein Ortspolynom fx, fy, fz, fα, fβ. Die Ortspolynome fx, fy, fz, fα, fβ definieren für aufeinanderfolgende Abschnitte eines Bahnparameters s jeweils einen Verlauf in der jeweiligen Dimension als Funktion des Bahnparameters s. Das Teileprogramm 16 kann von einer entsprechenden numerischen Steuerung 19 direkt verwertet werden.

Die vorliegende Erfindung weist viele Vorteile auf. Insbesondere kann eine überlegene, optimierte Bewegungsführung des Werkzeugs 4 relativ zum Werkstück 5 erfolgen. Die Qualität des fertig bearbeiteten Werkstücks 5 kann erhöht werden. Auch kann die Geschwindigkeit der Programmverarbeitung in der erfindungsgemäßen numerischen Steuerung 19 gesteigert werden. Weiterhin wird die erfindungsgemäße numerische Steuerung 19 gegenüber einer konventionellen numerischen Steuerung 1 in erheblichem Umfang von Rechenaufgaben entlastet. Die erfindungsgemäße numerische Steuerung 19 kann daher gegebenenfalls kostengünstiger realisiert werden. Einschränkungen bei der Bearbeitung treten nicht auf. Insbesondere können weiterhin Eingaben der Bedienperson U sowie Interaktionen mit der speicherprogrammierbaren Steuerung 25 berücksichtigt werden. Die Satzstruktur des konventionellen Teileprogramms 8 bleibt erhalten.

Es ist sogar möglich, dass die erfindungsgemäße numerische Steuerung 19 zunächst ein konventionelles Teileprogramm 8 mit konventionellen Datensätzen 9 abarbeitet, die konventionellen Datensätze 9 jedoch an die Recheneinrichtung 10 übermittelt und nach und nach jeweils konventionelle Datensätze 9 des konventionellen Teileprogramms 8 durch erfindungsgemäße Datensätze 17 ersetzt. Die Recheneinrichtung 10 kann nach Bedarf angeordnet sein. Sie kann Bestandteil der numerischen Steuerung 19 sein oder in der Nähe der erfindungsgemäßen numerischen Steuerung 19 angeordnet sein. Sie kann aber ebenso entfernt von dieser angeordnet sein, beispielsweise in einer Cloud. In diesem Fall kann eine Kommunikation zwischen der erfindungsgemäßen numerischen Steuerung 19 und der Recheneinrichtung 10 beispielsweise über eine Anbindung an ein Rechnernetz erfolgen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Betriebsverfahren für eine Recheneinrichtung (10),
- wobei die Recheneinrichtung (10) anhand einer herzustellenden Kontur eines Werkstücks (5) ein Teileprogramm (16) für eine numerische Steuerung (19) erstellt,
- wobei die Recheneinrichtung (10) das Teileprogramm (16) in der Form erstellt, dass es eine Abfolge von von der numerischen Steuerung (19) sequenziell nacheinander abzuarbeitenden Datensätzen (17) umfasst,
- wobei die Datensätze (17) für mehrere Dimensionen der Bewegung eines Werkzeugs (4) einer von der numerischen Steuerung (19) gesteuerten Werkzeugmaschine (2) relativ zum Werkstück (5) jeweils ein Ortspolynom (fx, fy, fz, fα, fβ) umfassen,
- wobei die Ortspolynome (fx, fy, fz, fα, fβ) für aufeinanderfolgende Abschnitte eines Bahnparameters (s) jeweils einen Verlauf in der jeweiligen Dimension als Funktion des Bahnparameters (s) definieren.

2. Betriebsverfahren nach Anspruch 1,
**dadurch gekennzeichnet,**
**dass** die Recheneinrichtung (10) dem jeweiligen Datensatz (17) eine jeweilige translatorische Wunschgeschwindigkeit (v*) zuordnet.

3. Betriebsverfahren nach Anspruch 2,
**dadurch gekennzeichnet,**
**dass** der Recheneinrichtung (10) eine maximal mögliche Dynamik und/oder eine kinematische Transformation der Werkzeugmaschine (2) bekannt sind und dass die Recheneinrichtung (10) dem jeweiligen Datensatz (17) als jeweilige translatorische Wunschgeschwindigkeit (v*) ein Geschwindigkeitspolynom (fv) zuordnet, bei dem die maximal mögliche Dynamik und/oder die kinematische Transformation der Werkzeugmaschine (2) berücksichtigt sind.

4. Betriebsverfahren nach Anspruch 1, 2 oder 3,
**dadurch gekennzeichnet,**
**dass** die Recheneinrichtung (10) bei der Ermittlung eines jeweiligen Ortspolynoms (fx, fy, fz, fα, fβ) jeweils einen zugehörigen Ort (P1) des Werkzeugs (4) relativ dem Werkstück (5) ermittelt und dass die Recheneinrichtung (10) bei der Ermittlung des jeweiligen Ortspolynoms (fx, fy, fz, fα, fβ) diejenigen bereits ermittelten Ortspolynome (fx, fy, fz, fα, fβ) berücksichtigt, deren zugehöriger Ort (P2) einen Abstand (a) zu dem Ort (P1) des noch zu ermittelnden Ortspolynoms (fx, fy, fz, fα, fβ) unterschreitet.

5. Betriebsverfahren nach einem der obigen Ansprüche,
**dadurch gekennzeichnet,**
**dass** der Recheneinrichtung (10) einzuhaltende Toleranzen bekannt sind und dass die Recheneinrichtung (10) die Ortspolynome (fx, fy, fz, fα, fβ) derart ermittelt, dass eine Abweichung der durch die Ortspolynome (fx, fy, fz, fα, fβ) definierten Kontur des Werkstücks (5) von der herzustellenden Kontur innerhalb der einzuhaltenden Toleranzen liegt.

6. Betriebsverfahren nach einem der obigen Ansprüche,
**dadurch gekennzeichnet,**
**dass** die Ortspolynome (fx, fy, fz, fα, fβ) mindestens Polynome 3. Grades sind.

7. Computerprogramm für eine Recheneinrichtung (10), wobei das Computerprogramm Maschinencode (12) umfasst, der von der Recheneinrichtung (10) abarbeitbar ist, wobei die Abarbeitung des Maschinencodes (12) durch die Recheneinrichtung (10) bewirkt, dass die Recheneinrichtung (10) ein Betriebsverfahren nach einem der Ansprüche 1 bis 6 ausführt.

8. Recheneinrichtung, wobei die Recheneinrichtung mit einem Computerprogramm (11) nach Anspruch 7 programmiert ist, so dass die Recheneinrichtung im Betrieb ein Betriebsverfahren nach einem der Ansprüche 1 bis 6 ausführt.

9. Teileprogramm für eine numerische Steuerung (19),
- wobei das Teileprogramm eine Abfolge von von der numerischen Steuerung (19) sequenziell nacheinander abzuarbeitenden Datensätzen (17) umfasst,
- wobei die Datensätze (17) für mehrere Dimensionen der Bewegung eines Werkzeugs (4) einer von der numerischen Steuerung (19) gesteuerten Werkzeugmaschine (2) relativ zu einem Werkstück (5) jeweils ein Ortspolynom (fx, fy, fz, fα, fβ) umfassen,
- wobei die Ortspolynome (fx, fy, fz, fα, fβ) für aufeinanderfolgende Abschnitte eines Bahnparameters (s) jeweils einen Verlauf der Bewegung in der jeweiligen Dimension als Funktion des Bahnparameters (s) definieren.

10. Teileprogramm nach Anspruch 9,
**dadurch gekennzeichnet,**
**dass** dem jeweiligen Datensatz (17) eine jeweilige translatorische Wunschgeschwindigkeit (v*) zugeordnet ist und dass die dem jeweiligen Datensatz (17) zugeordnete translatorische Wunschgeschwindigkeit (v*) ein Geschwindigkeitspolynom (fv) ist.

11. Teileprogramm nach Anspruch 9 oder 10,
**dadurch gekennzeichnet,**
**dass** die Ortspolynome (fx, fy, fz, fα, fβ) mindestens Polynome 3. Grades sind.

12. Steuerverfahren für eine numerische Steuerung (19),
- wobei die numerische Steuerung (19) sequenziell nacheinander eine Abfolge von Datensätzen (17) eines Teileprogramms (16) abarbeitet,
- wobei die numerische Steuerung (19) anhand der Datensätze (17) zumindest Lagesollwerte für mehrere Achsen (3) einer von der numerischen Steuerung (19) gesteuerten Werkzeugmaschine (2) ermittelt und die Achsen (3) entsprechend ansteuert, so dass ein Werkzeug (4) der Werkzeugmaschine (2) relativ zu einem zu bearbeitenden Werkstück (5) entlang einer durch das Teileprogramm (16) definierten Bahn verfahren wird,
- wobei die Datensätze (17) für mehrere Dimensionen der Bewegung des Werkzeugs (4) relativ zum Werkstück (5) jeweils ein Ortspolynom (fx, fy, fz, fα, fβ) umfassen,
- wobei die Ortspolynome (fx, fy, fz, fα, fβ) für aufeinanderfolgende Abschnitte eines Bahnparameters (s) jeweils einen Verlauf der Bewegung in der jeweiligen Dimension als Funktion des Bahnparameters (s) definieren,
- wobei die numerische Steuerung (19) die Lagesollwerte für die Achsen (3) anhand der durch das Teileprogramm (16) vorgegebenen Ortspolynome (fx, fy, fz, fα, fβ) ermittelt.

13. Steuerverfahren nach Anspruch 12,
**dadurch gekennzeichnet,**
**dass** dem jeweiligen Datensatz (17) eine jeweiliges translatorisches Geschwindigkeitspolynom (fv) zugeordnet ist und dass die numerische Steuerung (19) das jeweilige translatorische Geschwindigkeitspolynom (fv) als Geschwindigkeitspolynom übernimmt.

14. Steuerverfahren nach Anspruch 12 oder 13,
**dadurch gekennzeichnet,**
**dass** die Ortspolynome (fx, fy, fz, fα, fβ) mindestens Polynome 3. Grades sind.

15. Steuerverfahren nach Anspruch 12, 13 oder 14, ,
**dadurch gekennzeichnet,**
**dass** die numerische Steuerung (19) im Rahmen der Ermittlung der Lagesollwerte für die Achsen (3) zusätzlich eine Vorgabe einer Bedienperson (U) zur Änderung einer translatorischen Geschwindigkeit, mit der das Werkzeug (4) relativ zu dem Werkstück (5) entlang der Bahn verfahren werden soll, von der Bedienperson (U) vorgegebene oder messtechnisch erfasste Korrekturen (K) und/oder Freigaben und Sperren durch eine speicherprogrammierbare Steuerung (25) berücksichtigt.

16. Betriebssystem für eine numerische Steuerung (19), wobei das Betriebssystem Maschinencode (21) umfasst, der von der numerischen Steuerung (19) abarbeitbar ist, wobei die Abarbeitung des Maschinencodes (21) durch die numerische Steuerung (19) bewirkt, dass die numerische Steuerung (19) ein Steuerverfahren nach einem der Ansprüche 12 bis 15 ausführt.

17. Numerische Steuerung, wobei die numerische Steuerung mit einem Betriebssystem (20) nach Anspruch 16 programmiert ist, so dass die numerische Steuerung im Betrieb ein Steuerverfahren nach einem der Ansprüche 12 bis 15 ausführt.
